# EUROPÄISCHE PATENTSCHRIFT

(11) **EP 4 264 761 B1**
(45) Veröffentlichungstag und Bekanntmachung des Hinweises auf die Patenterteilung: **04.03.2026**
(21) Anmeldenummer: 21839145.6
(22) Anmeldetag: 14.12.2021
(51) Int. Cl.: H02G 1/12, H01R 43/04, H01R 43/042

(54) **ABISOLIEREINHEIT EINES PRESSWERKZEUGS, PRESSWERKZEUG UND VERFAHREN ZUR MONTAGE EINER EINSTELLEINHEIT**
STRIPPING UNIT OF A PRESSING TOOL, PRESSING TOOL, AND METHOD FOR MOUNTING AN ADJUSTMENT UNIT
UNITÉ DE DÉNUDAGE D'UN OUTIL DE PRESSAGE, OUTIL DE PRESSAGE ET PROCÉDÉ DE MONTAGE D'UNE UNITÉ DE RÉGLAGE

(30) Priorität: 17.12.2020 DE 102020133953
(43) Veröffentlichungstag der Anmeldung: 25.10.2023
(73) Patentinhaber: Weidmüller Interface GmbH & Co. KG, 32758 Detmold (DE)
(72) Erfinder: BRÖKER, Thilo, 32758 Detmold (DE); HETLAND, Detlev, 32760 Detmold (DE); HANNING, Günther, 32758 Detmold (DE); HEGGEMANN, Christian, 32758 Detmold (DE); STORM, Siegfried, 33189 Schlangen (DE)
(74) Vertreter: Specht, Peter
(86) Internationale Anmeldenummer: PCT/EP2021/085759
(87) Internationale Veröffentlichungsnummer: WO 2022/129092

(56) Entgegenhaltungen:
- CN-A- 110 707 608
- JP-A- 2006 054 942
- US-A- 2 752 676
- US-A- 4 485 696

## Beschreibung

Die vorliegende Erfindung betrifft eine Abisoliereinheit eines Presswerkzeugs zum Einschneiden und Abziehen einer Leiterisolierung eines Leiterkabels gemäß dem Oberbegriff des Anspruchs 1.

Die Erfindung betrifft des Weiteren ein Presswerkzeug gemäß dem Oberbegriff des Anspruchs 7 sowie ein Verfahren zur Montage einer Einstelleinheit einer solchen Abisoliereinheit.

Gattungsgemäße Abisoliereinheiten sind beispielsweise in der EP 2056415 B1 beschrieben. Bei der aus dieser Druckschrift bekannten Abisolierzange weist die Abisoliereinheit eine Klemmbacke mit einer gegen eine an der Abisolierzange angeordnete zweite Klemmlippe pressbaren ersten Klemmlippe auf sowie eine in der Klemmbacke gelagerte erste Messereinheit, die gegen eine zweite Messereinheit hinter der zweiten Klemmlippe drückbar ist.

Um unterschiedlich dicke bzw. im Materialaufbau unterschiedliche Isolierschichten von Kabeln zuverlässig vom Leiter abtrennen zu können, wird hier vorgeschlagen, mehrere Messerhalter bereitzustellen, die in einfacher Weise bei der beschriebenen Abisolierzange ausgetauscht werden können.

Die dort gezeigte und beschriebene Konstruktion hat sich in der Praxis durchaus bewährt.

Aus der US 4 485 696 A ist eine Abisoliereinheit bekannt, bei der zur Abtrennung von im Materialaufbau unterschiedliche Isolierschichten von Kabeln unterhalb des unteren Messerhalters eine Stellschraube direkt in einen Boden der Klemmbacke eingeschraubt ist, wobei der Boden der Klemmbacke zur zuverlässigen Halterung der Stellschraube eine große Materialdicke aufweisen muss und dadurch das Gewicht des Handwerkzeugs erhöht.

Aufgabe der vorliegenden Erfindung ist es, eine Abisoliereinheit eines Presswerkzeugs sowie ein Presswerkzeug bereitstellen zu können, bei dem der Austausch der Messerhalter zur Abtrennung der Isolierschicht vom Leiter durch Vorsehen einer Stellschraube zur Einstellung der Einschnitttiefe eines Messerhalters vermieden werden kann, bei alternativer Halterung der Stellschraube.

Weitere Aufgabe der Erfindung ist, ein einfaches Verfahren zur Montage einer Abisoliereinheit bereitzustellen.

Die erste Aufgabe wird durch eine Abisoliereinheit eines Presswerkzeugs zum Einschneiden und Abziehen einer Leiterisolierung eines Leiterkabels mit den Merkmalen des Anspruchs 1 sowie durch ein Presswerkzeug mit den Merkmalen des Anspruchs 7 gelöst.

Die zweite Aufgabe wird durch ein Verfahren zur Montage einer Abisoliereinheit mit den Merkmalen des Anspruchs 9 gelöst.

Die erfindungsgemäße Abisoliereinheit eines Presswerkzeugs zum Einschneiden und Abziehen einer Leiterisolierung eines Leiterkabels weist eine erste Klemmbacke mit einer gegen eine am Presswerkzeug angeordnete zweite Klemmlippe anpressbaren ersten Klemmlippe auf sowie eine in der Klemmbacke gelagerte erste Messereinheit.

In der Klemmbacke ist eine Einstelleinheit zur variablen Einstellung einer Einschnitttiefe der Messereinheit angeordnet, mit einer Stellschraube und einem Teller zum Anheben bzw. Absenken der Messereinheit.

Die Stellschraube ist dabei durch eine Öffnung in einem Boden des Aufnahmeraumes verstellbar.

Weiter weist die Einstelleinheit eine Mutter zur Halterung der Stellschraube in einem Aufnahmeraum der Klemmbacke sowie eine von dem Teller abstützbare Druckplatte auf.

Mit einer solchen erfindungsgemäßen Abisoliereinheit ist in äußerst einfacher Weise die Lagerhöhe der Messereinheit in der Klemmbacke auf unterschiedliche Isoliermaterialdicken der Leiterisolierung eines Leiterkabels einstellbar, ohne dass unterschiedliche Messereinheiten mit unterschiedlich dimensionierten Messern bereitgestellt werden müssen und durch die im Aufnahmeraum der Klemmbacke untergebrachte Mutter die Materialdicke der Klemmbacke nicht zur Bereitstellung eines hinreichend langen Gewindeganges für die Stellschraube klein gehalten werden kann.

Die Druckplatte sorgt für eine gleichmäßige Auflage der Messereinheit.

Vorteilhafte Ausführungsvarianten sind Gegenstand der Unteransprüche.

Gemäß einer vorteilhaften Weiterbildung ist der Teller mit der Stellschraube einstückig ausgebildet.

Dadurch ist der Montageaufwand der Abisoliereinheit reduziert.

Gemäß einer weiteren vorteilhaften Ausführungsvariante sind an den Aufnahmeraum einander gegenüberliegenden Seitenwänden der Klemmbacke Vorsprünge angeformt, wobei die Mutter in einem Raum zwischen einem Boden des Aufnahmeraums und einer diesem Raum zugewandten Unterseite der Vorsprünge gegen seitliches Verschieben in Richtung der Seitenwände sowie gegen Abheben weg von dem Boden gesichert ist.

Dies ermöglicht insbesondere den Einsatz einer einstückig mit dem Teller ausgebildeten Stellschraube, die von einer dem Boden abgewandten offenen Oberseite des Aufnahmeraums her in diesen einführbar ist.

Gemäß einer vorteilhaften Weiterbildung erstreckt sich ein Endstück der Stellschraube, das sich von einer dem Boden abgewandten Seite des Tellers erstreckt, in eine Bohrung in der Druckplatte.

Dies ermöglicht einen einfachen Zugriff auf die Stellschraube, beispielsweise mit einem Schraubwerkzeug.

Gemäß einer weiteren vorteilhaften Ausführungsvariante weist der Aufnahmeraum der Klemmbacke einen Einlassschacht auf, durch den die Stellschraube zusammen mit der Mutter in Richtung des Bodens absenkbar einführbar ist.

Die Mutter ist gemäß einer weiteren bevorzugten Ausführungsvariante als Vierkantmutter ausgebildet, was eine besonders einfache Drehfixierung der Mutter im Aufnahmeraum der Klemmbacke ermöglicht.

Das erfindungsgemäße Presswerkzeug weist zwei relativ zueinander bewegbare Handgriffe auf, eine Gehäuseschale sowie eine an der Gehäuseschale angeordnete Abisoliereinheit mit einer relativ zur Gehäuseschale schwenkbaren Klemmbacke.

Die Klemmbacke bildet zusammen mit einer Klemmlippe am vorderen Teil der Gehäuseschale ein Werkzeugmaul, in welchem zwei relativ zueinander bewegliche Messerhalter mit je einem Abisoliermesser gelagert sind.

Die Abisoliereinheit zeichnet sich dabei durch den oben beschriebenen Aufbau aus.

Das erfindungsgemäße Verfahren weist die folgenden Verfahrensschritte auf:
- Verschrauben der Stellschraube mit der Mutter soweit, dass ein erstes Ende der Stellschraube nicht aus der Mutter vorsteht,
- Einsetzen der Stellschraube mit der Mutter in den Aufnahmeraum der Klemmbacke,
- Verschieben der Mutter mit der Stellschraube in einen Bereich zwischen den Vorsprüngen und dem Boden, bis das erste Ende der Stellschraube auf der Öffnung im Boden positioniert ist,
- Aufsetzen der Druckplatte auf den Teller der Stellschraube.

Nachfolgend werden bevorzugte Ausführungsbeispiele der Erfindung anhand der beiliegenden Zeichnungen näher erläutert. Es zeigen:
- Figur 1: eine Seitenansicht einer Ausführungsvariante eines erfindungsgemäßen Presswerkzeugs mit einer Abisoliereinheit,
- Figur 2: eine Ausschnittsvergrößerung des in Figur 1 mit II bezeichneten Ausschnitts des Presswerkzeugs,
- Figuren 3 - 9: perspektivische bzw. Schnittdarstellungen der Klemmbacke der Abisoliereinheit mit darin eingebauter Einstelleinheit bei unterschiedlichen Montageschritten.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Abisoliereinheit, Presswerkzeug, Klemmbacke, Stellschraube und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

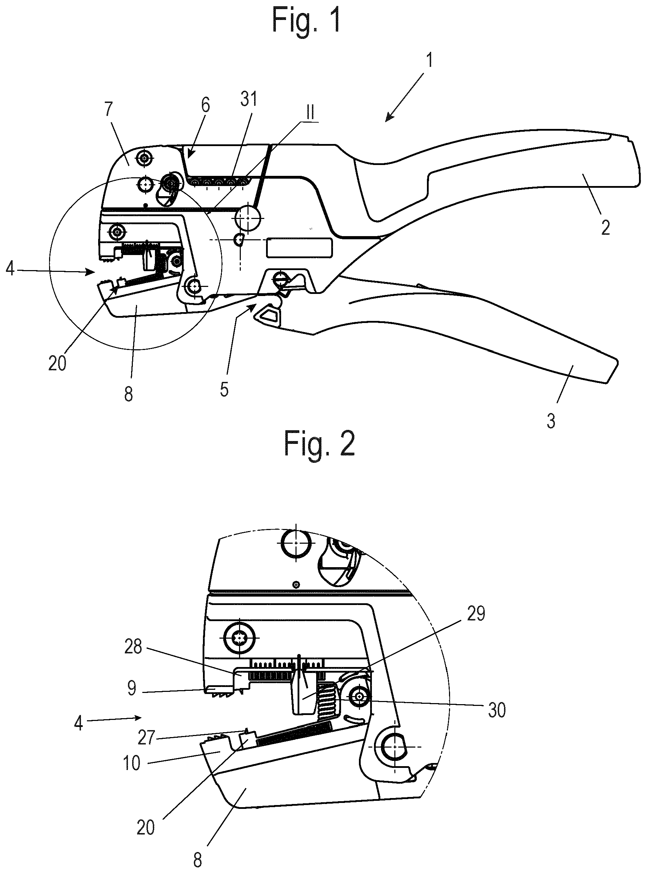

In Figur 1 ist eine Ausführungsvariante eines erfindungsgemäßen Presswerkzeugs mit dem Bezugszeichen 1 bezeichnet. Das Presswerkzeug 1 weist zwei Handhebel 2 und 3 auf. Der eine Handhebel 2 ist einstückig an einer Gehäuseschale 7 angeformt, während der andere Handhebel 3 schwenkbar an der Gehäuseschale 7 gelagert ist.

Anstelle der Betätigung des Presswerkzeugs 1 durch die Handgriffe 2, 3 ist es auch denkbar, das Presswerkzeug 1 als automatisches oder halbautomatisches Presswerkzeug mit motorischem Antrieb auszuführen.

Das Presswerkzeug 1 weist weiter eine Crimpeinheit 6 und eine Schneideinheit 5 auf, mit der ein Leiterkabel durchgetrennt werden kann.

Des Weiteren weist das Presswerkzeug 1 ein hier als Abisoliereinheit 4 bezeichnetes Werkzeugmaul auf, in dem eine Ummantelung eines von einem Bediener des Presswerkzeugs 1 bestimmten Teilstück eines Leiterkabels von der Leiterlitze abgelöst werden kann.

Die Abisoliereinheit 4 weist eine erste Klemmbacke 8 auf, an deren vorderen Ende eine Klemmlippe 10 angeordnet ist. Der andere Teil des Werkzeugmauls wird dabei durch eine an der Gehäuseschale 7 des Presswerkzeugs 1 angeordnete zweite Klemmlippe 9 begrenzt.

In der Klemmbacke 8 ist eine erste Messereinheit 20 gelagert, die über ein Federelement 30 mit einer zweiten Messereinheit 28 gekoppelt ist und die hinter der zweiten Klemmlippe 9 im Zangenmaul angeordnet ist.

Zur Einstellung einer Länge des abzuisolierenden Isoliermaterials ist in der hier gezeigten bevorzugten Ausführungsvariante, wie in Figur 2 gut zu erkennen ist, ein Leiteranschlag 29 an der oberen Messereinheit 28 verschiebbar festgelegt.

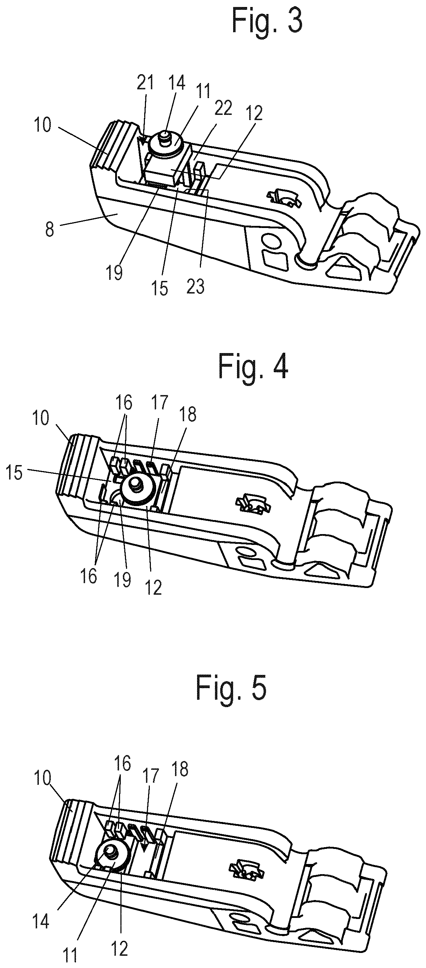

Wie in den Figuren 3 - 9 dargestellt ist, ist in der Klemmbacke 8 eine Einstelleinheit zur variablen Einstellung einer Einschnitttiefe der Messereinheit 20 aufgenommen.

Die Einstelleinheit weist eine Stellschraube 14 auf, eine Mutter 12 zur Halterung der Stellschraube 14 in einem Aufnahmeraum 21 der Klemmbacke 8 sowie einen Teller 11 zum Anheben bzw. Absenken der Messereinheit 20.

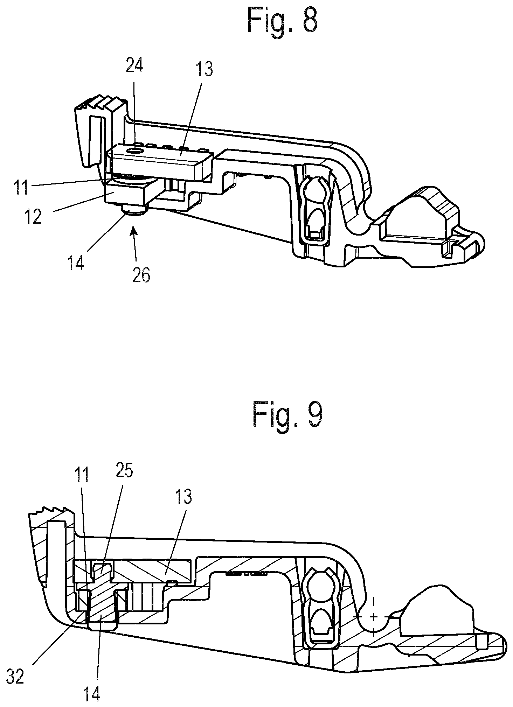

Die Stellschraube 14 ist dabei durch eine Öffnung 19 in einem Boden 15 des Aufnahmeraumes 21, wie es beispielhaft in Figur 9 dargestellt ist, verstellbar.

Der Aufbau der Einstelleinheit und deren Montage in der Klemmbacke 8 wird nun anhand der Figuren 3-9 näher erläutert.

Wie in Figur 3 dargestellt, wird zunächst die Stellschraube 14 mit der bevorzugt als Mehrkant, insbesondere Vierkantmutter ausgebildeten Mutter 12 verschraubt.

Die Stellschraube 14 weist an ihrem in den Figuren 3-9 unteren Ende stirnseitig eine Werkzeugaufnahme 26, beispielsweise eine Innenmehrkantöffnung auf. Von dieser Werkzeugaufnahme 26 erstreckt sich ein mit einem Außengewinde versehenes Halsstück 32.

Oberhalb dieses Halsstücks 32 ist der Durchmesser der Stellschraube 14 durch einen Teller 11 aufgeweitet.

Neben der hier gezeigten einstückigen Ausbildung des Tellers 11 mit der Stellschraube 14 ist es auch denkbar, den Teller 11 auf die Schraube aufzusetzen bzw. aufzuschrauben.

Oberhalb des Tellers 11 erstreckt sich ein weiteres, hier als Endstück 25 bezeichnetes Halsstück der Stellschraube 14, das der Verschiebesicherung einer Druckplatte 13 dient, auf der die Messereinheit 20 im montierten Zustand der Abisoliereinheit 4 aufliegt.

Bei den in den Figuren 3 und 4 gezeigten Montageschritten ist die Stellschraube 14 mit der Mutter 12 so weit verschraubt, dass ein erstes Ende (mit der Werkzeugaufnahme) der Stellschraube 14 nicht aus der Mutter 12 vorsteht.

Die Stellschraube 14 mit der Mutter 12 wird in den Figuren 3 und 4 von oben in den zum Werkzeugmaul hin offenen Aufnahmeraum 21 der Klemmbacke 8 eingesetzt.

Die Mutter 12 wird dabei bis auf den Boden 15 des Aufnahmeraums 21 entlang eines in dem Aufnahmeraum 21 vorgesehenen Einlassschachts 17 gedrückt.

Daran anschließend wird die Stellschraube 14 zusammen mit der Mutter 12 entlang des Bodens 15 in einen Bereich zwischen Vorsprüngen 16 und dem Boden 15 in Richtung der ersten Klemmlippe 10 verschoben.

Die Vorsprünge 16 sind in der hier gezeigten Ausführungsvariante als sich von einander gegenüberliegenden Seitenwänden 22, 23 der Klemmbacke 8 vorstehende Stege ausgebildet. Zwischen einer Unterkante dieser Vorsprünge 16 und dem Boden 15 ist genügend Distanz, um die Mutter 12 aufzunehmen.

In der in Figur 5 gezeigten Position der Stellschraube 14 mit der Mutter 12 ist ein Anheben der Mutter 12 weg von dem Boden 15 durch die Vorsprünge 16 verhindert.

Weiter ist in dieser Position das erste Ende der Stellschraube 14 über eine Öffnung 19 im Boden 15 des Aufnahmeraums 21 positioniert, so dass durch anschließendes Drehen der Stellschraube 14 in die Öffnung 19 im Boden 15 die Mutter 12 in ihrer Position verharrt, aber die Stellschraube 14 selbst zusammen mit dem Teller 11 vertikal bewegt wird. Durch die Positionierung des mit der Werkzeugaufnahme 26 versehenen Endes in die Öffnung 19 im Boden 15 des Aufnahmeraums 21 ist die Stellschraube zusätzlich gegen Zurückschieben in den Einlassschacht 17 gesichert.

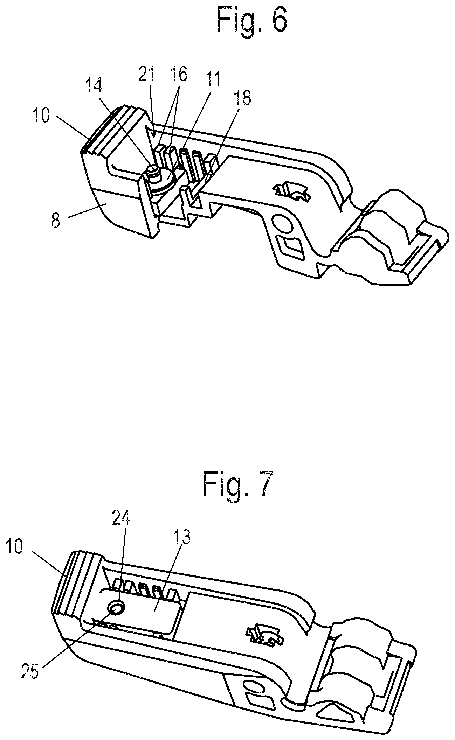

Die in Figur 6 gezeigte Aufrissdarstellung der Klemmbacke 8 zeigt nochmals die arretierte Position der Mutter 12 zwischen Boden 15 und Vorsprüngen 16.

Wie in Figur 7, 8 und 9 dargestellt ist, wird im Anschluss die Druckplatte 13 auf den Teller 11 der Stellschraube 14 aufgesetzt.

In dieser Druckplatte 13 ist eine Bohrung 24 vorgesehen, in die das Endstück 25 der Stellschraube 14 eintaucht und so die Druckplatte 13 in formschlüssiger Weise in der Auflageebene der Druckplatte 13 fixiert.

Denkbar ist auch eine Ausführungsvariante der Druckplatte 13 ohne eine solche Bohrung 24. In diesem Fall endet die Stellschraube 14 an der Oberseite des Tellers 11, so dass eine Unterseite der Druckplatte 13 wie bei der gezeigten Ausführungsvariante auf dem Teller 11 aufliegt, die Druckplatte 13 in diesem Fall innerhalb der Klemmbacke 8 gegen ein Verschieben weg von dem Teller 11 gesichert ist.

Auf der Druckplatte 13 kommt die Messereinheit 20 zum Aufliegen.

Durch Verstellen der Stellschraube 14 ist so in einfacher Weise ein Anheben oder Absenken der Druckplatte 13 ermöglicht, was einhergeht mit einem Anheben bzw. Absenken der Messereinheit 20, um so die Einschnitttiefe des Messers 27 der Messereinheit 20 in die Leiterisolierung des Leiterkabels einzustellen.

### Bezugszeichenliste

- 1: Presswerkzeug
- 2: erster Handgriff
- 3: zweiter Handgriff
- 4: Abisoliereinheit
- 5: Schneideinheit
- 6: Crimpeinheit
- 7: Gehäuseschale
- 8: Klemmbacke
- 9: Klemmlippe
- 10: Klemmlippe
- 11: Teller
- 12: Mutter
- 13: Druckplatte
- 14: Stellschraube
- 15: Boden
- 16: Vorsprung
- 17: Einlassschacht
- 18: Stufe
- 19: Öffnung
- 20: erste Messereinheit
- 21: Aufnahmeraum
- 22: Seitenwand
- 23: Seitenwand
- 24: Bohrung
- 25: Endstück
- 26: Werkzeugaufnahme
- 27: Messer
- 28: zweite Messereinheit
- 29: Leiteranschlag
- 30: Federelement
- 31: Aderendhülse
- 32: Halsstück

## Patentansprüche

1. Abisoliereinheit (4) eines Presswerkzeugs (1) zum Einschneiden und Abziehen einer Leiterisolierung eines Leiterkabels, aufweisend
- eine erste Klemmbacke (8) mit einer gegen eine am Presswerkzeug (1) angeordnete zweite Klemmlippe pressbaren ersten Klemmlippe (10),
- eine in der Klemmbacke (8) gelagerte erste Messereinheit (20),
- wobei in der Klemmbacke (8) eine Einstelleinheit zur variablen Einstellung einer Einschnitttiefe der Messereinheit (20) angeordnet ist, mit einer Stellschraube (14), und einem Teller (11) zum Anheben bzw. Absenken der Messereinheit (20),
- wobei die Stellschraube (14) durch eine Öffnung (19) in einem Boden (15) des Aufnahmeraumes (21) verstellbar ist,
**dadurch gekennzeichnet, dass**
die Einstelleinheit eine Mutter (12) zur Halterung der Stellschraube (14) in einem Aufnahmeraum (21) der Klemmbacke (8) sowie eine von dem Teller (11) abstützbare Druckplatte (13) aufweist.

2. Abisoliereinheit (4) nach Anspruch 1, **dadurch gekennzeichnet, dass** der Teller (11) mit der Stellschraube (14) einstückig ausgebildet ist.

3. Abisoliereinheit (4) nach einem der vorstehenden Ansprüche, **dadurch gekennzeichnet, dass** an den Aufnahmeraum (21) einander gegenüber liegenden Seitenwänden (22, 23) der Klemmbacke (8) Vorsprünge (16) angeformt sind, wobei die Mutter (12) in einem Raum zwischen einem Boden (15) des Aufnahmeraums (21) und einer diesem Raum zugewandten Unterseite der Vorsprünge gegen seitliches Verschieben in Richtung der Seitenwände (22, 23) sowie gegen Abheben weg von dem Boden (15) gesichert ist.

4. Abisoliereinheit (4) nach einem der vorstehenden Ansprüche, **dadurch gekennzeichnet, dass** ein Endstück (25) der Stellschraube (14), das sich von einer dem Boden abgewandten Seite des Tellers (11) erstreckt, sich in eine Bohrung (24) in der Druckplatte (13) erstreckt.

5. Abisoliereinheit (4) nach einem der vorstehenden Ansprüche, **dadurch gekennzeichnet, dass** der Aufnahmeraum (21) der Klemmbacke (8) einen Einlassschacht (17) aufweist, durch den die Stellschraube (14) zusammen mit der Mutter (12) in Richtung des Bodens (15) absenkbar einführbar ist.

6. Abisoliereinheit (4) nach einem der vorstehenden Ansprüche, **dadurch gekennzeichnet, dass** die Mutter (12) als Vierkantmutter ausgebildet ist.

7. Presswerkzeug (1), aufweisend
- eine Gehäuseschale (7),
- eine an der Gehäuseschale (7) angeordnete Abisoliereinheit (4) mit einer relativ zur Gehäuseschale (7) schwenkbaren Klemmbacke (8),
- wobei die Klemmbacke (8) zusammen mit einer Klemmlippe (9) am vorderen Teil der Gehäuseschale (7) ein Werkzeugmaul bildet, in welchem zwei relativ zueinander bewegliche Messerhalter mit je einem Abisoliermesser gelagert sind,
**dadurch gekennzeichnet, dass**
- die Abisoliereinheit (4) gemäß einem oder mehreren der vorstehenden Ansprüche ausgebildet ist.

8. Presswerkzeug (1) nach Anspruch 7 mit zwei relativ zueinander bewegbaren Handgriffen (2, 3) zur Betätigung des Presswerkzeugs.

9. Verfahren zur Montage einer Abisoliereinheit (4) gemäß einem der Ansprüche 3 oder 4-6, wenn abhängig vom Anspruch 3, mit den Verfahrensschritten:
- Verschrauben der Stellschraube (14) mit der Mutter (12) soweit, dass ein erstes Ende der Stellschraube (14) nicht aus der Mutter vorsteht,
- Einsetzen der Stellschraube (14) mit der Mutter (12) in den Aufnahmeraum (21) der Klemmbacke (8),
- Verschieben der Mutter (12) mit der Stellschraube (14) in einen Bereich zwischen den Vorsprüngen (16) und dem Boden (15), bis das erste Ende der Stellschraube (14) auf der Öffnung (19) im Boden (15) positioniert ist,
- Aufsetzen der Druckplatte (13) auf den Teller (11) der Stellschraube (14).

## Claims

1. A stripping unit (4) of a pressing tool (1) for cutting into and stripping a conductor insulation of a conductor cable, having
- a first clamping jaw (8) with a first clamping lip (10) which can be pressed against a second clamping lip arranged on the pressing tool (1),
- a first knife unit (20) mounted in the clamping jaw (8),
- wherein an adjustment unit for variably adjusting a cutting depth of the knife unit (20) is arranged in the clamping jaw (8), with an adjustment screw (14) and a plate (11) for lifting or lowering the cutting unit (20),
- wherein the adjustment screw (14) can be adjusted through an aperture (19) in a floor (15) of the receiving space (21),
**characterized in that**
- the adjustment unit has a nut (12) for fastening the adjustment screw (14) in a receiving space (21) of the clamping jaw (8) and a pressure plate (13) which can be supported by the plate (11).

2. The stripping unit (4) according to claim 1, **characterized in that** the plate (11) is formed integrally with the adjustment screw (14).

3. The stripping unit (4) according to any one of the preceding claims, **characterized in that** protrusions (16) are molded on the side walls (22, 23) of the clamping jaw (8) which are situated opposite one another on the receiving space (21), the nut (12) being secured, in a space between a floor (15) of the receiving space (21) and an underside of the protrusions which faces this space, against lateral displacement in the direction of the side walls (22, 23) and against being lifted away from the floor (15).

4. The stripping unit (4) according to any one of the preceding claims, **characterized in that** an end piece (25) of the adjustment screw (14), which extends from a plate (11) side facing away from the floor, extends into a bore (24) in the pressure plate (13).

5. The stripping unit (4) according to any one of the preceding claims, **characterized in that** the receiving space (21) of the clamping jaw (8) has an inlet shaft (17), through which the adjustment screw (14) together with the nut (12) can be introduced in the direction of the floor (15) in a lowerable manner.

6. The stripping unit (4) according to any one of the preceding claims, **characterized in that** the nut (12) is formed as a square nut.

7. A pressing tool (1), having
- a housing shell (7),
- a stripping unit (4) which is arranged on the housing shell (7) and which has a clamping jaw (8) which can pivot relative to the housing shell (7),
- wherein the clamping jaw (8), together with a clamping lip (9) on the front part of the housing shell (7), forms a tool mouth, in which two knife retainers, which are movable relative to one another, are each mounted with a stripping knife,
**characterized in that**
- the stripping unit (4) is formed according to any one or more of the preceding claims.

8. The pressing tool (1) according to claim 7 with two handles (2, 3), which are movable relative to one another, for actuating the pressing tool.

9. A method for mounting a stripping unit (4) according to any one of claims 3 or 4-6, if dependent on claim 3, with the method steps:
- screwing the adjustment screw (14) onto the nut (12) to such an extent that a first end of the adjustment screw (14) does not protrude from the nut,
- inserting the adjustment screw (14) with the nut (12) into the receiving space (21) of the clamping jaw (8),
- displacing the nut (12) with the adjustment screw (14) into a region between the protrusions (16) and the floor (15) until the first end of the adjustment screw (14) is positioned on the aperture (19) in the floor (15),
- placing the pressure plate (13) on the plate (11) of the adjustment screw (14).

## Revendications

1. Unité de dénudage (4) d'un outil de pressage (1) destiné à inciser et retirer une isolation de conducteur d'un câble de conducteurs, comportant
- un premier mors de serrage (8) avec une première lèvre de serrage (10) pouvant être pressée contre une deuxième lèvre de serrage disposée sur l'outil de pressage (1) ;
- une première unité de lame (20) supportée dans le mors de serrage (8) ;
- dans laquelle est disposée dans le mors de serrage (8) une unité de réglage pour le réglage variable d'une profondeur d'incision de l'unité de lame (20), munie d'une vis de réglage (14) et d'un disque (11) pour soulever ou abaisser l'unité de lame (20) ;
- dans laquelle la vis de réglage (14) peut être ajustée à travers une ouverture (19) dans un fond (15) du réceptacle (21) ;
**caractérisée en ce que** l'unité de serrage comporte un écrou (12) destiné à retenir la vis de réglage (14) dans un réceptacle (21) du mors de serrage (8) et une plaque de pression (13) qui peut s'appuyer sur le disque (11).

2. Unité de dénudage (4) selon la revendication 1, **caractérisée en ce que** le disque (11) est formé d'une pièce avec la vis de réglage (14).

3. Unité de dénudage (4) selon l'une des revendications précédentes, **caractérisée en ce que** des saillies (16) sont formées sur le réceptacle (21) sur des parois latérales (22, 23) du mors de serrage (8) qui se font face, l'écrou (12) étant fixé dans un espace défini entre un fond (15) du réceptacle (21) et une face inférieure des saillies tournée vers cet espace de façon à l'empêcher de se déplacer latéralement en direction des parois latérales (22, 23) et de se soulever du fond (15).

4. Unité de dénudage (4) selon l'une des revendications précédentes, **caractérisée en ce qu'**un bout (25) de la vis de réglage (14) qui s'étend à partir d'une face du disque (11) opposée au fond s'étend dans un perçage (24) dans la plaque de pression (13).

5. Unité de dénudage (4) selon l'une des revendications précédentes, **caractérisée en ce que** le réceptacle (21) du mors de serrage (8) comporte une cavité d'entrée (17) à travers laquelle la vis de réglage (14) peut être introduite avec l'écrou (12) de façon à pouvoir être descendue en direction du fond (15).

6. Unité de dénudage (4) selon l'une des revendications précédentes, **caractérisée en ce que** l'écrou (12) est conçu comme un écrou carré.

7. Outil de pressage (1) comprenant
- une enveloppe de boîtier (7) ;
- une unité de dénudage (4) disposée sur l'enveloppe de boîtier (7), munie d'un mors de serrage (8) capable de pivoter par rapport à l'enveloppe de boîtier (7) ;
- dans lequel le mors de serrage (8) forme avec une lèvre de serrage (9) sur la partie antérieure de l'enveloppe de boîtier (7) une mâchoire d'outil dans laquelle sont supportés deux porte-lames mobiles l'un par rapport à l'autre, munis chacun d'une lame de dénudage ;
**caractérisé en ce que**
- l'unité de dénudage (4) est conçue selon une ou plusieurs des revendications précédentes.

8. Outil de pressage (1) selon la revendication 7, muni de deux poignées (2, 3) déplaçables l'une par rapport à l'autre pour l'actionnement de l'outil de pressage.

9. Procédé pour l'assemblage d'une unité de dénudage (4) selon l'une des revendications 3 ou 4 à 6 si dépendantes de la revendication 3, comprenant les étapes de procédé suivantes :
- vissage de la vis de réglage (14) avec l'écrou (12) jusqu'à ce qu'une première extrémité de la vis de réglage (14) ne dépasse pas de l'écrou ;
- insertion de la vis de réglage (14) avec l'écrou (12) dans le réceptacle (21) du mors de serrage (8) ;
- déplacement de l'écrou (12) avec la vis de réglage (14) dans une zone comprise entre les saillies (16) et le fond (15), jusqu'à ce que la première extrémité de la vis de réglage (14) soit positionnée sur l'ouverture (19) dans le fond (15) ;
- pose de la plaque de pression (13) sur le disque (11) de la vis de réglage (14).
